# EUROPEAN PATENT SPECIFICATION

(11) **EP 4 014 270 B1**
(45) Date of publication and mention of the grant of the patent: **16.08.2023**
(21) Application number: 20804672.2
(22) Date of filing: 15.10.2020
(51) Int. Cl.: H01M 8/04014, F23N 1/00, H01M 8/0432, H01M 8/04664, H01M 8/04746

(54) **FUEL CELL OVERHEATING PROTECTION SYSTEM AND METHOD**
SYSTEM UND VERFAHREN ZUR VERMEIDUNG VON ÜBERHITZUNG IN EINER BRENNSTOFFZELLE
SYSTÈME ET PROCÉDÉ DE PROTECTION CONTRE UNE SURCHAUFFE DE PILE À COMBUSTIBLE

(30) Priority: 15.08.2019 CN 201921330912 U
(43) Date of publication of application: 22.06.2022
(73) Proprietor: Ceres Intellectual Property Company Limited, West Sussex RH13 5PX (GB)
(72) Inventor: SUN, Lei, Weifang, Shandong 261061 (CN)
(74) Representative: Wynne-Jones IP Limited
(86) International application number: PCT/IB2020/059680
(87) International publication number: WO 2021/028897

(56) References cited:
- EP-A1- 3 316 372
- EP-A2- 0 227 478
- JP-A- 2018 179 354

## Description

### TECHNICAL FIELD

The present invention relates to the field of fuel cells, particularly to a fuel cell overheating protection system and method.

### BACKGROUND ART

In the combustion process of a fuel cell, if overheat combustion occurs, the fuel cell may fail. The so-called overheat combustion means that the temperature of the high temperature gas generated in the combustion process of the fuel is too high.

In view of this, there is a need for a solution that can avoid a fuel cell fault caused by overheat combustion.

EP 3 316 372 discloses a fuel cell overheating protection system, comprising a fuel gas isolation valve that is constituted by two valves connected in series.

### SUMMARY OF THE INVENTION

The present invention aims to avoid a fuel cell fault caused by overheat combustion and to provide a fuel cell overheating protection system.

A first aspect of the present application provides a fuel cell overheating protection system. The system comprises a fuel gas isolation valve (1), a flow control unit (2), a combustor (3), a first controller (4), a second controller (5), a first temperature sensor (6), a second temperature sensor (7), a first switch K1 and a second switch K2. The fuel gas isolation valve (1) is used to control the on/off state of a fuel gas pipeline; and the flow control unit (2) is used to control the supply volume of fuel gas. The combustor (3) is used to provide heat for fuel cell reaction based on a high temperature gas generated after ignition of the input fuel and air. The first temperature sensor (6) is used to connect the combustor (3) and to collect the temperature of the high temperature gas generated from combustion in the combustor (3). The second temperature sensor (7) is used to connect the combustor (3) and to collect the temperature of the high temperature gas generated from combustion in the combustor (3).

The first switch K1 and the second switch K2 are connected in series in a power circuit of the fuel gas isolation valve (1) and are used to control the power on/off state of the fuel gas isolation valve (1);

The first switch K1 and the second switch K2 are also connected in series in a power circuit of the flow control unit (2) and are used to control the power on/off state of the flow control unit (2);

The first controller (4) is used to connect the first temperature sensor (6) and is used to control the first switch K1 to be disconnected when the temperature detected by the first temperature sensor (6) is not lower than a preset temperature threshold;

The second controller (5) is used to connect the second temperature sensor (7) and is used to control the second switch K2 to be disconnected when the temperature detected by the second temperature sensor (7) is not lower than the preset temperature threshold.

A second aspect of the invention provides a fuel cell overheating protection method. The method comprises using the fuel gas isolation valve (1) to control the on/off state of a fuel gas pipeline; using the flow control unit (2) to control the supply volume of fuel gas; using the combustor (3) to provides heat for fuel cell reaction based on a high temperature gas generated after ignition of the input fuel and air; measuring the temperature of the high temperature gas generated from combustion in the combustor (3) with the first temperature sensor (6) connected to the combustor (3); measuring the temperature of the high temperature gas generated from combustion in the combustor (3) with the second temperature sensor (7) connected to the combustor (3); controlling the power on/off state of the fuel gas isolation valve (1) using the first switch K1 and the second switch K2 connected in series in a power circuit of the fuel gas isolation valve (1); controlling the power on/off state of the flow control unit (2) using the first switch K1 and the second switch K2 connected in series in a power circuit of the flow control unit (2); controlling the first switch K1 to be disconnected when the temperature detected by the first temperature sensor (6) is not lower than a preset temperature threshold using the first controller (4) connected to the first temperature sensor (6); and controlling the second switch K2 to be disconnected when the temperature detected by the second temperature sensor (7) is not lower than the preset temperature threshold using the second controller (5) connected to the second temperature sensor (7).

Optionally, the first switch K1 and the second switch are both relays.

Optionally, the first controller (4) is also used to connect the second controller (5) and is also used to send a first message to the second controller (5) after controlling the first switch K1 to be disconnected. The second controller (5) is also used to control the second switch K2 to be disconnected according to the first message when the temperature detected by the second temperature sensor (7) is lower than the preset temperature threshold.

Optionally, the second controller (5) is also used to determine that the second temperature sensor is faulty when the first message is received and the temperature detected by the second temperature sensor (7) is lower than the preset temperature threshold.

Optionally, the second controller (5) is also used to determine the first controller (4) or the first temperature sensor (6) is faulty when the first message is not received and the temperature detected by the second temperature sensor (7) is not lower than the preset temperature threshold.

Optionally, a signal connection or a hard-wired connection is adopted between the first controller (4) and the second controller (5).

An embodiment of the present invention provides a fuel cell overheating protection system. The system comprises a fuel gas isolation valve (1), a flow control unit (2), a combustor (3), a first controller (4), a second controller (5), a first temperature sensor (6), a second temperature sensor (7), a first switch K1 and a second switch K2. The fuel gas isolation valve (1) is used to control the on/off state of a fuel gas pipeline; and the flow control unit (2) is used to control the supply volume of fuel gas; the combustor (3) is used to provide heat for fuel cell reaction based on a high temperature gas generated after ignition of the input fuel and air; the first temperature sensor (6) is used to connect the combustor (3) and to collect the temperature of the high temperature gas generated from combustion in the combustor (3); the second temperature sensor (7) is used to connect the combustor (3) and to collect the temperature of the high temperature gas generated from combustion in the combustor (3); the first switch K1 and the second switch K2 are connected in series in a power circuit of the fuel gas isolation valve (1) and are used to control the power on/off state of the fuel gas isolation valve (1); the first switch K1 and the second switch K2 are also connected in series in a power circuit of the flow control unit (2) and are used to control the power on/off state of the flow control unit (2); the first controller (4) is used to connect the first temperature sensor (6) and is used to control the first switch K1 to be disconnected when the temperature detected by the first temperature sensor (6) is not lower than a preset temperature threshold; and the second controller (5) is used to connect the second temperature sensor (7) and is used to control the second switch K2 to be disconnected when the temperature detected by the second temperature sensor (7) is not lower than the preset temperature threshold.

Thus it can be seen that in an embodiment of the present invention, two temperature sensors (i.e., the first temperature sensor (6) and the second temperature sensor (7)) are used to collect the temperature of a high temperature gas generated from combustion in the combustor (3). Two switches (i.e., the first switch K1 and the second switch K2) are connected in series in the power circuit of the fuel gas isolation valve (1), and the first controller (4) can control the first switch K1 to be disconnected when the temperature detected by the first temperature sensor (6) is not lower than a preset temperature threshold; the second controller (5) can control the second switch K2 to be disconnected when the temperature detected by the second temperature sensor (7) is not lower than the preset temperature threshold. Thus it can be seen that in an embodiment of the present application, the first controller (4) and the second controller (5) both can control the power disconnection of the fuel gas isolation valve (1) and the power disconnection of the flow control unit (2) by controlling the on/off state of the switches corresponding to them when overheat combustion occurs, and as long as the first controller (4) and the second controller (5) are not faulty at the same time, the power disconnection of the fuel gas isolation valve (1) and the power disconnection of the flow control unit (2) can be effectively controlled. It is less likely that the first controller (4) and the second controller (5) are faulty at the same time. Therefore, by utilizing the system provided by the embodiment of the invention, a fuel cell fault caused by overheat combustion can be effectively avoided.

### BRIEF DESCRIPTION OF THE DRAWINGS

The drawings used in the description of the embodiments will be briefly described below. The drawings in the description below are just some embodiments of the present invention.
Fig. 1 is a structural schematic view of a fuel cell overheating protection system.
Fig. 2 is a structural schematic view of an alternative fuel cell overheating protection system.

### DETAILED DESCRIPTION

Embodiments of the present application will be described below in conjunction with the drawings. The described embodiments are only some, not all, of the embodiments of the present application.

The inventor found during research, that in the combustion process of a fuel cell, if overheat combustion occurs, the fuel cell may fail. The so-called overheat combustion means that the temperature of the high temperature gas generated in the combustion process of the fuel is too high. In the prior art, in case of overheat combustion, it can be solved by the second controller through adjustment of the supply volume of fuel gas. However, in this solution, once the second controller is faulty, the combustion of the combustor will lose control and a fuel cell fault caused by overheat combustion cannot be effectively avoided.

Embodiments of the present application provide a fuel cell overheating protection system to effectively avoid a fuel cell fault caused by overheat combustion.

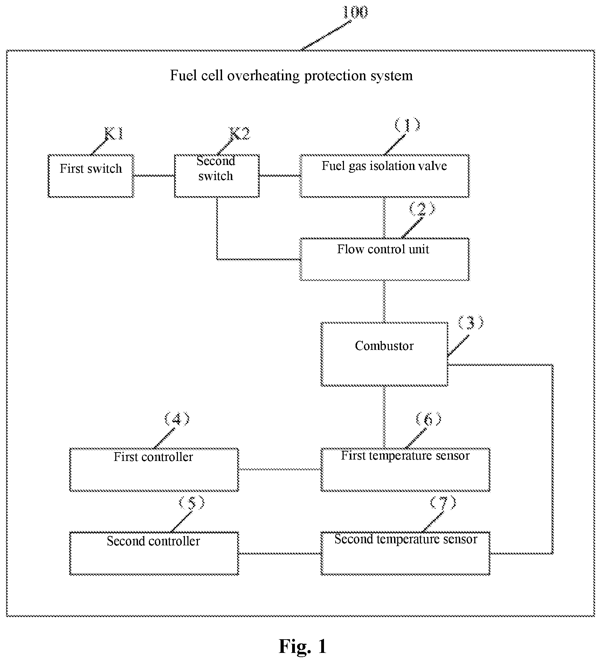

Fig. 1 is a structural schematic view of a fuel cell overheating protection system provided by an embodiment of the present invention. The fuel cell overheating protection system 100 provided by the embodiment of the present application may specifically comprise a fuel gas isolation valve (1), a flow control unit (2), a combustor (3), a first controller (4), a second controller (5), a first temperature sensor (6), a second temperature sensor (7), a first switch K1 and a second switch K2. The fuel gas isolation valve (1) is used to control the on/off state of a fuel gas pipeline; and the flow control unit (2) is used to control the supply volume of fuel gas. The combustor (3) is used to provide heat for fuel cell reaction based on a high temperature gas generated after ignition of the input fuel and air. The first temperature sensor (6) is used to connect the combustor (3) and to collect the temperature of the high temperature gas generated from combustion in the combustor (3). The second temperature sensor (7) is used to connect the combustor (3) and to collect the temperature of the high temperature gas generated from combustion in the combustor (3). The first switch K1 and the second switch K2 are connected in series in a power circuit of the fuel gas isolation valve (1) and are used to control the power on/off state of the fuel gas isolation valve (1).

When the first switch K1 is disconnected or the second switch K2 is disconnected, the fuel gas isolation valve (1) is powered off. The first switch K1 and the second switch K2 are also connected in series in a power circuit of the flow control unit (2) and are used to control the power on/off state of the flow control unit (2).

When the first switch K1 is disconnected or the second switch K2 is disconnected, the flow control unit (2) is powered off.

The first controller (4) is used to connect the first temperature sensor (6) and is used to control the first switch K1 to be disconnected when the temperature detected by the first temperature sensor (6) is not lower than a preset temperature threshold.

In the embodiment, if the temperature detected by the first temperature sensor (6) is not lower than a preset temperature threshold, it means the temperature of a high temperature gas generated in the combustor (3) is high and occurrence of overheat combustion can be considered. Therefore, the disconnection of the first switch K1 is controlled to cut off the power of the fuel gas isolation valve (1) and the power of the flow control unit (2). The preset temperature threshold can be determined according to the actual condition.

The second controller (5) is used to connect the second temperature sensor (7) and is used to control the second switch K2 to be disconnected when the temperature detected by the second temperature sensor (7) is not lower than the preset temperature threshold.

In this embodiment, if the temperature detected by the second temperature sensor (7) is not lower than a preset temperature threshold, it means the temperature of a high temperature gas generated in the combustor (3) is high and occurrence of overheat combustion can be considered. Therefore, the disconnection of the second switch K2 is controlled to cut off the power of the fuel gas isolation valve (1) and the power of The first switch K1 and the second switch K2 both can be relays. The above-mentioned control of disconnection of the first switch K1 can be control of disconnection of the normally closed contact of a first relay; accordingly, the above-mentioned control of disconnection of the second switch K2 can be control of disconnection of the normally closed contact of a second relay.

This embodiment does not specifically delimit the first controller (4) and the second controller (5). As an example, the first controller (4) can be a fuel cell controller, or Two temperature sensors (i.e., the first temperature sensor (6) and the second temperature sensor (7)) are used to collect the temperature of a high temperature gas generated from combustion in the combustor (3). Two switches (i.e., the first switch K1 and the second switch K2) are connected in series in the power circuit of the fuel gas isolation valve (1), and the first controller (4) can control the first switch K1 to be disconnected when the temperature detected by the first temperature sensor (6) is not lower than a preset temperature threshold; the second controller (5) can control the second switch K2 to be disconnected when the temperature detected by the second temperature sensor (7) is not lower than the preset temperature threshold. Thus it can be seen that in an embodiment of the present application, the first controller (4) and the second controller (5) both can control the power disconnection of the fuel gas isolation valve (1) and the power disconnection of the flow control unit (2) by controlling the on/off state of the switches corresponding to them when overheat combustion occurs, and as long as the first controller (4) and the second controller (5) are not faulty at the same time, the power disconnection of the fuel gas isolation valve (1) and the power disconnection of the flow control unit (2) can be effectively controlled. It is less likely that the first controller (4) and the second controller (5) are faulty at the same time. Therefore, by utilizing the system provided by the embodiment of the invention, a fuel cell fault caused by overheat combustion can be effectively avoided.

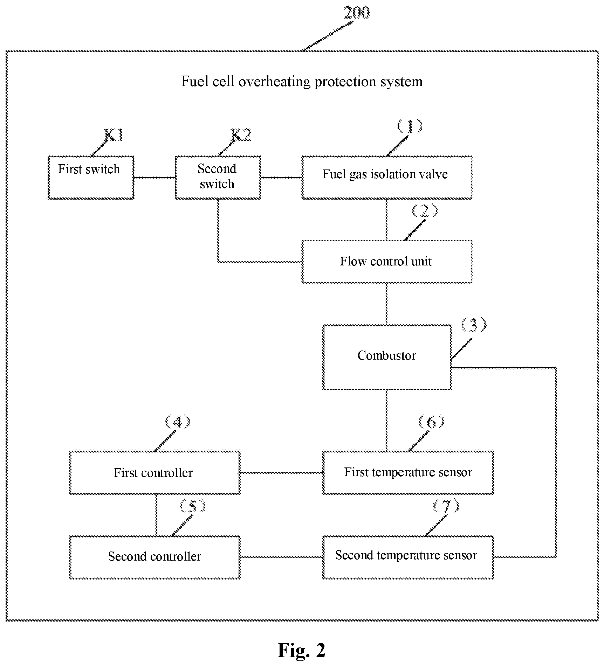

Fig. 2 is a structural schematic view of an alternative fuel cell overheating protection system provided by an embodiment of the present invention. In the fuel cell overheating protection system 200 shown in Fig. 2, the first controller (4) can also be connected to the second controller (5). The embodiment of the present application does not specifically delimit the connection method between the first controller (4) and the second controller (5), and a signal connection or a hard-wired connection can be adopted between the first controller (4) and the second controller (5).

After the first controller (4) controls the first switch K1 to be disconnected, the first controller (4) can also send a first message to the second controller (5); and the first message is used to inform the second controller (5) of possible overheat combustion. Considering that the second temperature sensor (7) may become faulty in the actual application, if the second controller (5) receives the first message, even if the temperature detected by the second temperature sensor (7) is lower than the preset temperature threshold, the second controller (5) may control the second switch K2 to be disconnected according to the first message in order to avoid a fuel cell fault caused by overheat combustion.

Although the first controller (4) has sent a control instruction of disconnection to the first switch K1 before the first controller (4) sends the first message to the second controller (5), if the first switch K1 is faulty, it is likely that the first switch K1 has not executed this control instruction of disconnection. For this reason, the second controller (5) may control the second switch K2 to be disconnected according to the first message to further improve the reliability of the system 100.

If the second controller (5) has received the first message and the temperature detected by the second temperature sensor (7) is lower than the preset temperature threshold, it is likely that the second temperature sensor (7) is faulty. It is also likely that the first temperature sensor is faulty, but in order to avoid a fuel cell fault caused by overheat combustion, under this circumstance, the second controller (5) can determine that the second temperature sensor (7) is faulty, thereby facilitating the maintenance personnel to troubleshoot the second temperature sensor (7).

Accordingly, if the second controller (5) does not receive the first message and the temperature detected by the second temperature sensor (7) is not lower than the preset temperature threshold, the second controller (5) determines the first controller (4) or the first temperature sensor (6) is faulty, thereby facilitating the maintenance personnel to troubleshoot the first controller (4) or the first temperature sensor (6).

Other implementations of the system and method of present application will be apparent. The present application intends to cover any such modifications, uses or changes of the present invention. The description and embodiments are exemplary only. The real scope of the present invention is stated in the following claims.

## Claims

1. A fuel cell overheating protection system, comprising:
a fuel gas isolation valve (1),
a flow control unit (2),
a combustor (3),
a first controller (4),
a second controller (5),
a first temperature sensor (6),
a second temperature sensor (7),
a first switch K1, and
a second switch K2;
wherein:
the fuel gas isolation valve (1) controls the on/off state of a fuel gas pipeline;
the flow control unit (2) controls the supply volume of fuel gas;
the combustor (3) provides heat for fuel cell reaction based on a high temperature gas generated after ignition of the input fuel and air;
the first temperature sensor (6) is connected to the combustor (3) and measures the temperature of the high temperature gas generated from combustion in the combustor (3);
the second temperature sensor (7) is connected to the combustor (3) and measures the temperature of the high temperature gas generated from combustion in the combustor (3);
the first switch K1 and the second switch K2 are connected in series in a power circuit of the fuel gas isolation valve (1) to control the power on/off state of the fuel gas isolation valve (1);
the first switch K1 and the second switch K2 are also connected in series in a power circuit of the flow control unit (2) to control the power on/off state of the flow control unit (2);
the first controller (4) is connected to the first temperature sensor (6) and controls the first switch K1 to be disconnected when the temperature detected by the first temperature sensor (6) is not lower than a preset temperature threshold; and
the second controller (5) is connected to the second temperature sensor (7) and controls the second switch K2 to be disconnected when the temperature detected by the second temperature sensor (7) is not lower than the preset temperature threshold.

2. The system according to claim 1, wherein the first switch K1 and the second switch K2 are both relays.

3. The system according to claim 1 or 2, wherein the first controller (4) is connected to the second controller (5) and is configured to send a first message to the second controller (5) after controlling the first switch K1 to be disconnected; and
the second controller (5) controls the second switch K2 to be disconnected according to the first message when the temperature detected by the second temperature sensor (7) is lower than the preset temperature threshold.

4. The system according to claim 3, wherein the second controller (5) determines that the second temperature sensor is faulty when the first message is received and the temperature detected by the second temperature sensor (7) is lower than the preset temperature threshold.

5. The system according to claim 3 or 4, wherein the second controller (5) determines that the first controller (4) or the first temperature sensor (6) is faulty when the first message is not received and the temperature detected by the second temperature sensor (7) is not lower than the preset temperature threshold.

6. The system according to any of claims 3 to 5, wherein a signal connection or a hard-wired connection is adopted between the first controller (4) and the second controller (5).

7. A fuel cell overheating protection method for use in system comprising:
a fuel gas isolation valve (1),
a flow control unit (2),
a combustor (3),
a first controller (4),
a second controller (5),
a first temperature sensor (6),
a second temperature sensor (7),
a first switch K1, and
a second switch K2;
wherein the method comprises:
using the fuel gas isolation valve (1) to control the on/off state of a fuel gas pipeline;
using the flow control unit (2) to control the supply volume of fuel gas;
using the combustor (3) to provides heat for fuel cell reaction based on a high temperature gas generated after ignition of the input fuel and air;
measuring the temperature of the high temperature gas generated from combustion in the combustor (3) with the first temperature sensor (6) connected to the combustor (3);
measuring the temperature of the high temperature gas generated from combustion in the combustor (3) with the second temperature sensor (7) connected to the combustor (3);
controlling the power on/off state of the fuel gas isolation valve (1) using the first switch K1 and the second switch K2 connected in series in a power circuit of the fuel gas isolation valve (1);
controlling the power on/off state of the flow control unit (2) using the first switch K1 and the second switch K2 connected in series in a power circuit of the flow control unit (2);
controlling the first switch K1 to be disconnected when the temperature detected by the first temperature sensor (6) is not lower than a preset temperature threshold using the first controller (4) connected to the first temperature sensor (6); and
controlling the second switch K2 to be disconnected when the temperature detected by the second temperature sensor (7) is not lower than the preset temperature threshold using the second controller (5) connected to the second temperature sensor (7).

8. The method according to claim 7, wherein the first controller (4) is connected to the second controller (5) and sends a first message to the second controller (5) after controlling the first switch K1 to be disconnected; and
the second controller (5) controls the second switch K2 to be disconnected according to the first message when the temperature detected by the second temperature sensor (7) is lower than the preset temperature threshold.

9. The method according to claim 8, wherein the second controller (5) determines that the second temperature sensor is faulty when the first message is received and the temperature detected by the second temperature sensor (7) is lower than the preset temperature threshold.

10. The method according to claim 8 or 9, wherein the second controller (5) determines that the first controller (4) or the first temperature sensor (6) is faulty when the first message is not received and the temperature detected by the second temperature sensor (7) is not lower than the preset temperature threshold.

## Patentansprüche

1. Brennstoffzellenüberhitzungsschutzsystem, das umfasst:
ein Brenngasabsperrventil (1),
eine Durchflusssteuereinheit (2),
eine Brennkammer (3),
eine erste Steuerung (4),
eine zweite Steuerung (5),
einen ersten Temperatursensor (6),
einen zweiten Temperatursensor (7),
einen ersten Schalter K1 und
einen zweiten Schalter K2;
wobei:
das Brenngasabsperrventil (1) den Ein/Aus-Zustand einer Brenngasrohrleitung steuert;
die Durchflusssteuereinheit (2) das Versorgungsvolumen des Brenngases steuert;
die Brennkammer (3) Wärme für die Brennstoffzellenreaktion bereitstellt, basierend auf einem Gas mit hoher Temperatur, das nach der Zündung des Eingangsbrennstoffs und der Luft erzeugt wird;
der erste Temperatursensor (6) mit der Brennkammer (3) verbunden ist und die Temperatur des anhand der Verbrennung in der Brennkammer (3) erzeugten Gases mit hoher Temperatur misst,
der zweite Temperatursensor (7) mit der Brennkammer (3) verbunden ist und die Temperatur des anhand der Verbrennung in der Brennkammer (3) erzeugten Gases mit hoher Temperatur misst;
der erste Schalter K1 und der zweite Schalter K2 in einer Leistungsschaltung des Brenngasabsperrventils (1) in Reihe geschaltet sind, um den Ein/Aus-Zustand des Brenngasabsperrventils (1) zu steuern;
der erste Schalter K1 und der zweite Schalter K2 auch in einer Leistungsschaltung der Durchflusssteuereinheit (2) zum Steuern des Ein/Aus-Zustands der Durchflusssteuereinheit (2) in Reihe geschaltet sind;
die erste Steuerung (4) mit dem ersten Temperatursensor (6) verbunden ist und steuert, dass der erste Schalter K1 getrennt wird, wenn die von dem ersten Temperatursensor (6) erfasste Temperatur nicht niedriger als ein voreingestellter Temperaturschwellenwert ist; und
die zweite Steuerung (5) mit dem zweiten Temperatursensor (7) verbunden ist und steuert, dass der zweite Schalter K2 getrennt wird, wenn die von dem zweiten Temperatursensor (7) erfasste Temperatur nicht niedriger als der voreingestellte Temperaturschwellenwert ist.

2. System nach Anspruch 1, wobei der erste Schalter K1 und der zweite Schalter K2 beide Relais sind.

3. System nach Anspruch 1 oder 2, wobei die erste Steuerung (4) mit der zweiten Steuerung (5) verbunden ist und konfiguriert ist, um eine erste Nachricht an die zweite Steuerung (5), nachdem sie steuert, dass der erste Schalter K1 getrennt wird, zu senden; und
die zweite Steuerung (5) steuert, dass der zweite Schalter K2 gemäß der ersten Nachricht getrennt wird, wenn die von dem zweiten Temperatursensor (7) erfasste Temperatur niedriger als der voreingestellte Temperaturschwellenwert ist.

4. System nach Anspruch 3, wobei die zweite Steuerung (5) bestimmt, dass der zweite Temperatursensor fehlerhaft ist, wenn die erste Nachricht empfangen wird und die von dem zweiten Temperatursensor (7) erfasste Temperatur niedriger als der voreingestellte Temperaturschwellenwert ist.

5. System nach Anspruch 3 oder 4, wobei die zweite Steuerung (5) bestimmt, dass die erste Steuerung (4) oder der erste Temperatursensor (6) fehlerhaft ist, wenn die erste Nachricht nicht empfangen wird und die von dem zweiten Temperatursensor (7) erfasste Temperatur nicht niedriger als der voreingestellte Temperaturschwellenwert ist.

6. System nach einem der Ansprüche 3 bis 5, wobei eine Signalverbindung oder eine festverdrahtete Verbindung zwischen der ersten Steuerung (4) und der zweiten Steuerung (5) übernommen wird.

7. Brennstoffzellenüberhitzungsschutzverfahren zur Verwendung in einem System, umfassend:
ein Brenngasabsperrventil (1),
eine Durchflusssteuereinheit (2),
eine Brennkammer (3),
eine erste Steuerung (4),
eine zweite Steuerung (5),
einen ersten Temperatursensor (6),
einen zweiten Temperatursensor (7),
einen ersten Schalter K1 und
einen zweiten Schalter K2;
wobei das Verfahren umfasst:
Verwenden des Brenngasabsperrventils (1), um den Ein/Aus-Zustand einer Brenngasrohrleitung zu steuern;
Verwenden der Durchflusssteuereinheit (2), um das Versorgungsvolumen des Brenngases zu steuern;
Verwenden der Brennkammer (3), um Wärme für die Brennstoffzellenreaktion bereitzustellen, basierend auf einem Gas mit hoher Temperatur, das nach der Zündung des Eingangsbrennstoffs und der Luft erzeugt wird;
Messen der Temperatur des anhand der Verbrennung in der Brennkammer (3) erzeugten Gases mit hoher Temperatur, wobei der erste Temperatursensor (6) mit der Brennkammer (3) verbunden ist;
Messen der Temperatur des anhand der Verbrennung in der Brennkammer (3) erzeugten Gases mit hoher Temperatur, wobei der zweite Temperatursensor (7) mit der Brennkammer (3) verbunden ist;
Steuern des Ein/Aus-Zustands des Brenngasabsperrventils (1) unter Verwendung des ersten Schalters K1 und des zweiten Schalters K2, die in einer Leistungsschaltung des Brenngasabsperrventils (1) in Reihe geschaltet sind;
Steuern des Ein/Aus-Zustands der Durchflusssteuereinheit (2) unter Verwendung des ersten Schalters K1 und des zweiten Schalters K2, die in einer Leistungsschaltung der Durchflusssteuereinheit (2) in Reihe geschaltet sind;
Steuern, dass der erste Schalter K1 getrennt wird, wenn die von dem ersten Temperatursensor (6) erfasste Temperatur nicht niedriger als ein voreingestellter Temperaturschwellenwert ist, unter Verwendung der ersten Steuerung (4), die mit dem ersten Temperatursensor (6) verbunden ist; und
Steuern, dass der zweite Schalter K2 getrennt wird, wenn die von dem zweiten Temperatursensor (7) erfasste Temperatur nicht niedriger als der voreingestellte Temperaturschwellenwert ist, unter Verwendung der zweiten Steuerung (5), die mit dem zweiten Temperatursensor (7) verbunden ist.

8. Verfahren nach Anspruch 7, wobei die erste Steuerung (4) mit der zweiten Steuerung (5) verbunden ist und eine erste Nachricht an die zweite Steuerung (5) nach dem Steuern, dass der erste Schalter K1 getrennt wird, sendet; und
die zweite Steuerung (5) steuert, dass der zweite Schalter K2 gemäß der ersten Nachricht getrennt wird, wenn die von dem zweiten Temperatursensor (7) erfasste Temperatur niedriger als der voreingestellte Temperaturschwellenwert ist.

9. Verfahren nach Anspruch 8, wobei die zweite Steuerung (5) bestimmt, dass der zweite Temperatursensor fehlerhaft ist, wenn die erste Nachricht empfangen wird und die von dem zweiten Temperatursensor (7) erfasste Temperatur niedriger als der voreingestellte Temperaturschwellenwert ist.

10. Verfahren nach Anspruch 8 oder 9, wobei die zweite Steuerung (5) bestimmt, dass die erste Steuerung (4) oder der erste Temperatursensor (6) fehlerhaft ist, wenn die erste Nachricht nicht empfangen wird und die von dem zweiten Temperatursensor (7) erfasste Temperatur nicht niedriger als der voreingestellte Temperaturschwellenwert ist.

## Revendications

1. Système de protection contre la surchauffe d'une pile à combustible, comprenant :
une soupape d'isolement de gaz combustible (1),
une unité de commande du débit (2),
une chambre de combustion (3),
un premier dispositif de commande (4),
un second dispositif de commande (5),
un premier détecteur de température (6),
un second détecteur de température (7),
un premier commutateur K1, et
un second commutateur K2 ;
dans lequel :
la soupape d'isolement de gaz combustible (1) commande l'état marche/arrêt d'une conduite de gaz combustible ;
l'unité de commande du débit (2) commande le volume d'alimentation de gaz combustible ;
la chambre de combustion (3) fournit la chaleur nécessaire à une réaction de la pile à combustible en fonction d'un gaz à haute température généré après l'allumage du combustible et de l'air d'entrée ;
le premier détecteur de température (6) est connecté à la chambre de combustion (3) et mesure la température du gaz à haute température généré à partir de la combustion dans la chambre de combustion (3) ;
le second détecteur de température (7) est connecté à la chambre de combustion (3) et mesure la température du gaz à haute température généré à partir de la combustion dans la chambre de combustion (3) ;
le premier commutateur K1 et le second commutateur K2 sont connectés en série dans un circuit d'alimentation de la soupape d'isolement de gaz combustible (1) pour commander l'état marche/arrêt de la soupape d'isolement de gaz combustible (1) ;
le premier commutateur K1 et le second commutateur K2 sont également connectés en série dans un circuit d'alimentation de l'unité de commande du débit (2) pour commander l'état marche/arrêt de l'unité de commande du débit (2) ;
le premier dispositif de commande (4) est connecté au premier détecteur de température (6) et commande le premier interrupteur K1 pour qu'il soit déconnecté lorsque la température détectée par le premier détecteur de température (6) n'est pas inférieure à un seuil de température prédéfini ; et
le second dispositif de commande (5) est connecté au second détecteur de température (7) et commande le second commutateur K2 de se déconnecter lorsque la température détectée par le second détecteur de température (7) n'est pas inférieure au seuil de température prédéfini.

2. Système selon la revendication 1, dans lequel le premier commutateur K1 et le second commutateur K2 sont tous deux des relais.

3. Système selon la revendication 1 ou 2, dans lequel le premier dispositif de commande (4) est connecté au second dispositif de commande (5) et est configuré pour envoyer un premier message au second dispositif de commande (5) après la commande du premier commutateur K1 de se déconnecter ; et
le second dispositif de commande (5) commande le second commutateur K2 de se déconnecter en fonction du premier message lorsque la température détectée par le second détecteur de température (7) est inférieure au seuil de température prédéfini.

4. Système selon la revendication 3, dans lequel le second dispositif de commande (5) détermine que le second détecteur de température est défectueux lorsque le premier message est reçu et que la température détectée par le second détecteur de température (7) est inférieure au seuil de température prédéfini.

5. Système selon la revendication 3 ou 4, dans lequel le second dispositif de commande (5) détermine que le premier dispositif de commande (4) ou le premier détecteur de température (6) est défectueux lorsque le premier message n'est pas reçu et que la température détectée par le second détecteur de température (7) n'est pas inférieure au seuil de température prédéfini.

6. Système selon l'une quelconque des revendications 3 à 5, dans lequel une connexion de signal ou une connexion câblée est adoptée entre le premier dispositif de commande (4) et le second dispositif de commande (5).

7. Procédé de protection contre la surchauffe d'une pile à combustible pour une utilisation dans un système comprenant :
une soupape d'isolement de gaz combustible (1),
une unité de commande du débit (2),
une chambre de combustion (3),
un premier dispositif de commande (4),
un second dispositif de commande (5),
un premier détecteur de température (6),
un second détecteur de température (7),
un premier commutateur K1, et
un second commutateur K2 ;
dans lequel le procédé comprend :
l'utilisation de la soupape d'isolement de gaz combustible (1) pour commander l'état marche/arrêt d'une conduite de gaz combustible ;
l'utilisation de l'unité de commande du débit (2) pour commander le volume d'alimentation de gaz combustible ;
l'utilisation de la chambre de combustion (3) pour fournir la chaleur nécessaire à une réaction de la pile à combustible en fonction d'un gaz à haute température généré après l'allumage du combustible et de l'air d'entrée ;
la mesure de la température du gaz à haute température généré à partir de la combustion dans la chambre de combustion (3) à l'aide du premier détecteur de température (6) connecté à la chambre de combustion (3) ;
la mesure de la température du gaz à haute température généré à partir de la combustion dans la chambre de combustion (3) à l'aide du second détecteur de température (7) connecté à la chambre de combustion (3) ;
la commande de l'état marche/arrêt de la soupape d'isolement de gaz combustible (1) en utilisant le premier commutateur K1 et le second commutateur K2 connectés en série dans un circuit d'alimentation de la soupape d'isolement de gaz combustible (1) ;
la commande de l'état marche/arrêt de l'unité de commande du débit (2) en utilisant le premier commutateur K1 et le second commutateur K2 connectés en série dans un circuit d'alimentation de l'unité de commande du débit (2) ;
la commande du premier commutateur K1 de se déconnecter lorsque la température détectée par le premier détecteur de température (6) n'est pas inférieure à un seuil de température prédéfini en utilisant le premier dispositif de commande (4) connecté au premier détecteur de température (6) ; et
la commande du second commutateur K2 de se déconnecter lorsque la température détectée par le second détecteur de température (7) n'est pas inférieure au seuil de température prédéfini en utilisant le second dispositif de commande (5) connecté au second détecteur de température (7) .

8. Procédé selon la revendication 7, dans lequel le premier dispositif de commande (4) est connecté au second dispositif de commande (5) et envoie un premier message au second dispositif de commande (5) après la commande du premier commutateur K1 de se déconnecter ; et
le second dispositif de commande (5) commande le second commutateur K2 de se déconnecter en fonction du premier message lorsque la température détectée par le second détecteur de température (7) est inférieure au seuil de température prédéfini.

9. Procédé selon la revendication 8, dans lequel le second dispositif de commande (5) détermine que le second détecteur de température est défectueux lorsque le premier message est reçu et que la température détectée par le second détecteur de température (7) est inférieure au seuil de température prédéfini.

10. Procédé selon la revendication 8 ou 9, dans lequel le second dispositif de commande (5) détermine que le premier dispositif de commande (4) ou le premier détecteur de température (6) est défectueux lorsque le premier message n'est pas reçu et que la température détectée par le second détecteur de température (7) n'est pas inférieure au seuil de température prédéfini.
